# EUROPEAN PATENT SPECIFICATION

(11) **EP 2 553 881 B1**
(45) Date of publication and mention of the grant of the patent: **21.01.2015**
(21) Application number: 10849102.8
(22) Date of filing: 30.03.2010
(51) Int. Cl.: H04L 12/437, H04L 12/46

(54) **METHOD FOR PROTECTION AGAINST SUPERLOOPS IN AN ETHERNET RING**
VERFAHREN FÜR DEN SCHUTZ VOR SUPERLOOPS IN EINEM ETHERNET-RING
PROCÉDÉ DE PROTECTION CONTRE LES SUPERBOUCLES DANS UN ANNEAU ETHERNET

(43) Date of publication of application: 06.02.2013
(73) Proprietor: Telefonaktiebolaget LM Ericsson (publ), 164 83 Stockholm (SE)
(72) Inventor: DING, Zhemin, S-164 80 Stockholm (SE); SALTSIDIS, Panagiotis, S-118 29 Stockholm (SE)
(74) Representative: Zacco Sweden AB
(86) International application number: PCT/SE2010/050352
(87) International publication number: WO 2011/123001

(56) References cited:
- EP-A1- 1 575 221
- EP-A1- 1 729 453
- EP-A1- 1 768 319
- WO-A1-2009/111954
- WO-A1-2009/126390
- WO-A2-03/077459
- US-A1- 2009 316 571

## Description

### Technical Field

The present invention relates to a method for use in an interface node and an interface node in a broadband communication network, and in particular to a method in an interface node in an Ethernet ring, and an interface node in an Ethernet ring for protecting against superloops going through the Ethernet ring.

### Background

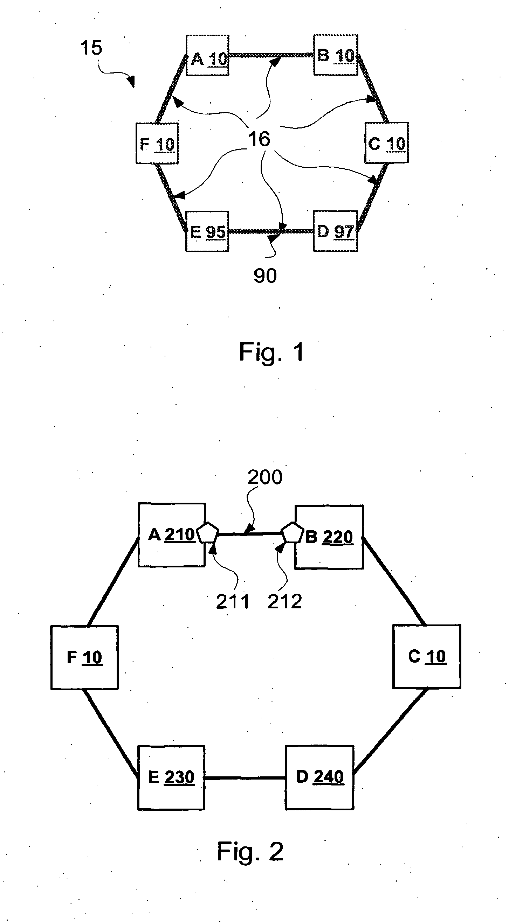

An Ethernet ring 15 is a collection of ring nodes forming a closed loop whereby each ring node is connected to two adjacent ring nodes via duplex communication links 16. Figure 1 illustrates an Ethernet ring 15 comprising 6 ring nodes connected to adjacent ring nodes via duplex communication links 16.

A loop of data in the Ethernet ring 15 consumes a lot of resources in the Ethernet ring 15 and is therefore an undesired condition. There is therefore a need for protection against loops in the Ethernet ring 15. The topology of an Ethernet Ring Protection, ERP, network can be a single Ethernet ring or a collection of interconnected Ethernet rings.

The G.8032 protocol is designed for Ethernet ring topologies and is developed as a standardized alternative to replace the spanning tree protocol, xSTP. It assumes standard 802.1 Q bridges are used and standard 802.3 MAC frames go around the Ethernet ring. G.8032 Ethernet ring nodes support standard FDB MAC learning, forwarding, flush behavior and port blocking/unblocking mechanisms.

The principle of loop prevention within the Ethernet ring 15 is to block one of the ring links 16, either a pre-determined link or a failed link. For example, in a normal state, where there is no link failure as in figure 1, one of the ring links 16 is designated as a Ring Protection Link, RPL, 90. The RPL 90 blocks Ethernet traffic to avoid traffic looping. An RPL blocking is provided by port blocking at both end of the RPL 90. One of the nodes is called RPL Owner Node, e.g. ring node E 95, which is also responsible for activating reversion behavior from protected or Manual Switching or Forced Switching conditions. The other node is called RPL Node, e.g. ring node D 97, which is not responsible for activating reversion behavior. In G.8032 version 1, one end of RPL is blocked for breaking the loop in the normal state. In the draft of G.8032 version 2, both ends of RPL are blocked in a normal state to avoid unnecessary flooding.

Figure 2 illustrates an Ethernet Ring Protection, ERP, state. When a link failure occurs, for example, a link 200 between Node A 210 and Node B 220. Node A 210 and Node B 220 block ports 211, 212 for the failed link 200 and send a R-APS, Ring-APS, Signal Failure messages to indicate the link failure. The Signal Failure messages are circulated around the Ethernet ring through a Ring APS channel (not shown). When the RPL Owner Node E 230 and RPL Node D 240 receive this message, they unblock ports to RPL.

When a link failure is restored, for example, if the link failure between Node A 210 and Node B 220 in Figure 2 disappears, then Node A 210 and Node B 220 keep port 211 and port 212 blocked and send out R-APS No Failure message. The messages are circulated around the ring through Ring APS channel. When the RPL Owner Node E 230 and RPL Node D 240 receive this message, they block the ports to RPL and send out R-APS Blocking messages. Node A 210 and Node B 220 unblock the port 211 and 212 when they receive the R-APS Blocking messages from Node E 230 and Node D 240. Now the ERP ring is back to the Normal State.

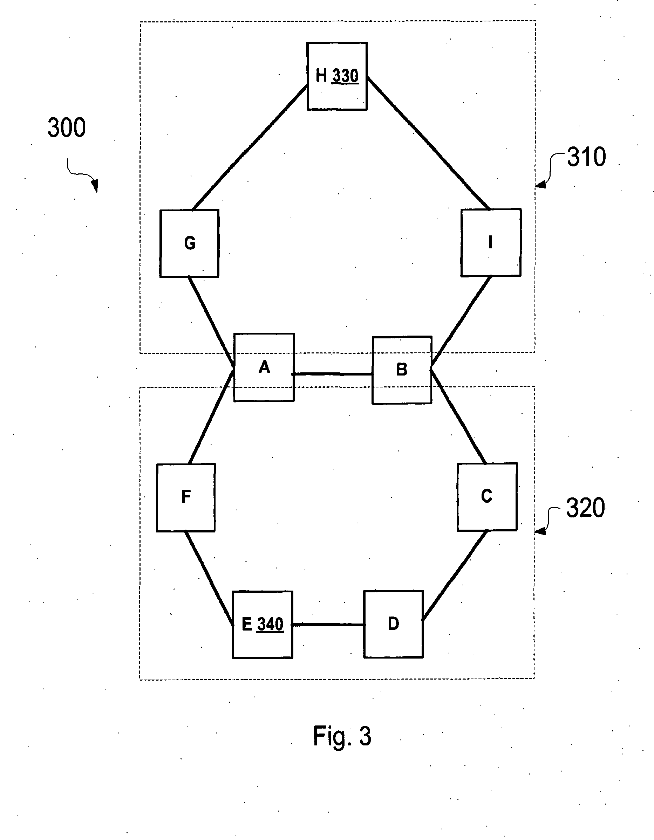

Figure 3 illustrates an example of a multi-ring/ladder network 300 comprising two Ethernet rings 310, 320. The G.8032 standard also supports the multi-ring/ladder network 300 illustrated in figure 3.

If the multi-ring/ladder network 300 is in its normal condition, RPL Owner Node and RPL node of each ring block the transmission and reception of traffic over the RPL for that ring. In this example, RPL Owner Node for ERP 1 is H 330 and for ERP 2 is E 340 .

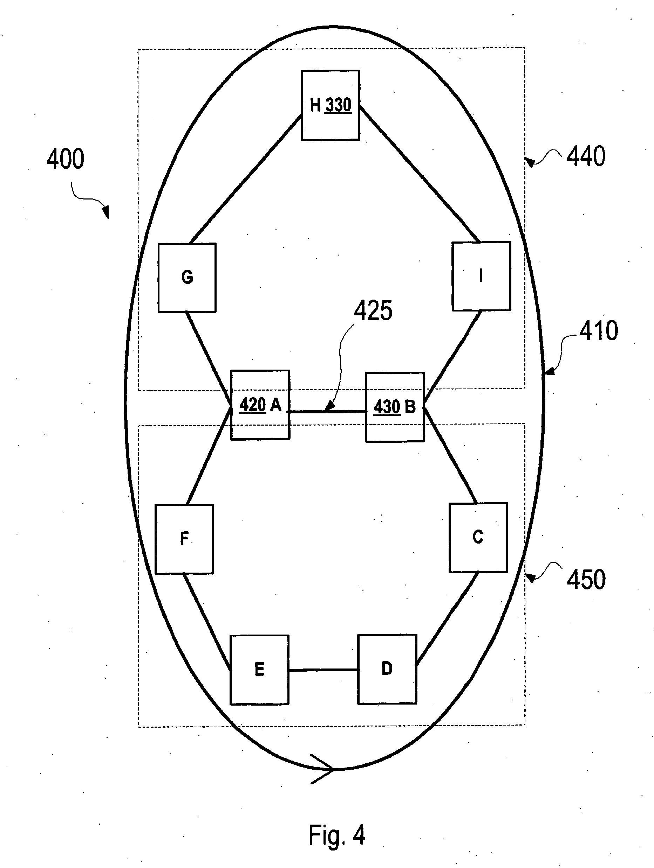

Figure 4 illustrates a multi-ring/ladder network 400 in which a superloop 410 can be created. A superloop 410 is formed when a shared link failure occurs. For example in Figure 4, if a link 425 between Node A 420 and Node B 430 fails, as this link 425 belongs to both ring 1 440 and ring 2 450, both rings 440, 450 initiate protection and unblock ports to RPL. A superloop 410 is formed. We therefore need a special protection mechanism for multi-ring/ ladder network 400 to avoid the superloop problem.

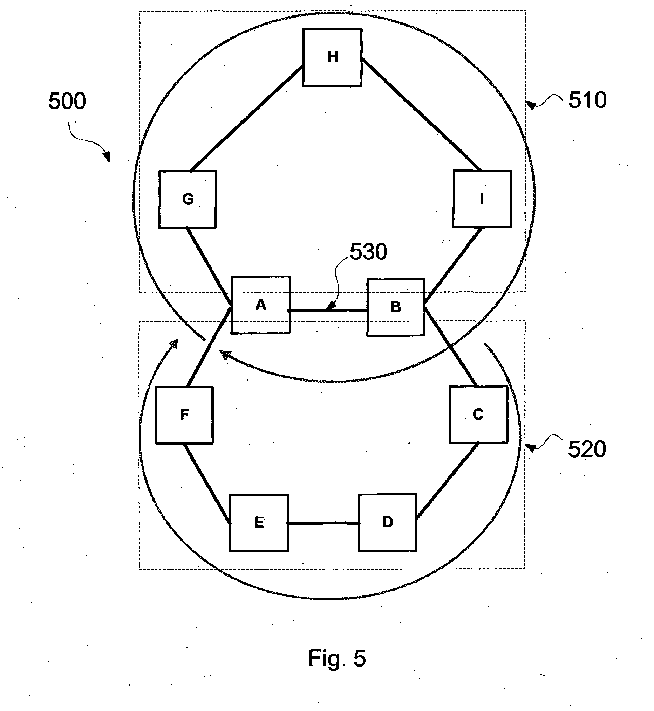

Figure 5 illustrates a Multi-ring/ladder network 500 with protection against a superloop. The superloop problem is solved by creating sub-rings. For example in Figure 5, ERP 1 510 is composed of nodes A, B, I, H and G and all links therein between. ERP 2 520 is composed of nodes A, B, C, D , E and F and all links except a link 530 between A and B. The link 530 between A and B only belongs to ERP 1 510. If the link 530 between A and B fails, only ERP1 510 will respond and ERP 2 520 will do nothing. ERP 2 520 is a sub-ring as defined in G.8032, which transmits R-APS message on the R-APS virtual channel.

A metro network is a network that covers a metropolitan area. The metro network is often based on the Ethernet standard. The metro network is commonly used as a metropolitan access network to connect subscribers and businesses to a larger service network or the Internet. In the metro network deployment, there may be a requirement to use G.8032 in an aggregation network and Virtual private LAN service, VPLS, in a core network.

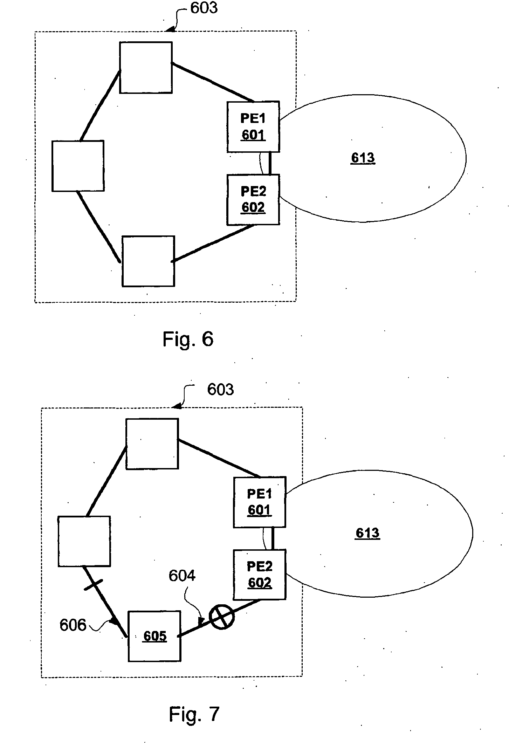

Figure 6 illustrates interworking between Provider edge, PE, routers 601, 602 and an Ethernet ring 603 running G.8032. The motivation of integrating Provider Edge routers 601, 602 into Ethernet ring 603 is to provide interface protection.

For PE1 601 and PE2 602 shown in figure 6, an interface (not shown) facing the Ethernet ring may be G.8032 ring ports. There is a dedicated tunnel (not shown) between PE1 601 and PE2 602. The G.8032 ring control messages received on the ring ports of PE1 601 or PE2 602 are transmitted transparently through the tunnel back to the Ethernet ring 603. No local ring control messages are leaked to a core network 613. No link level CCMs are sent through the tunnel between PE1 and PE2.

There are at least 3 interface failure scenarios:

### 1. Link failure between G.8032 Ring Bridge and one of the PEs 601, 602

For example, a link 604 between the Ring Bridge 605 and PE2 602 fails as shown figure 7. In this scenario, PE2 602 does nothing. The adjacent ring bridge 605 initiates Ethernet ring protection after detecting the link failure by unblocking RPL 606.

### 2. Tunnel failure between PE nodes

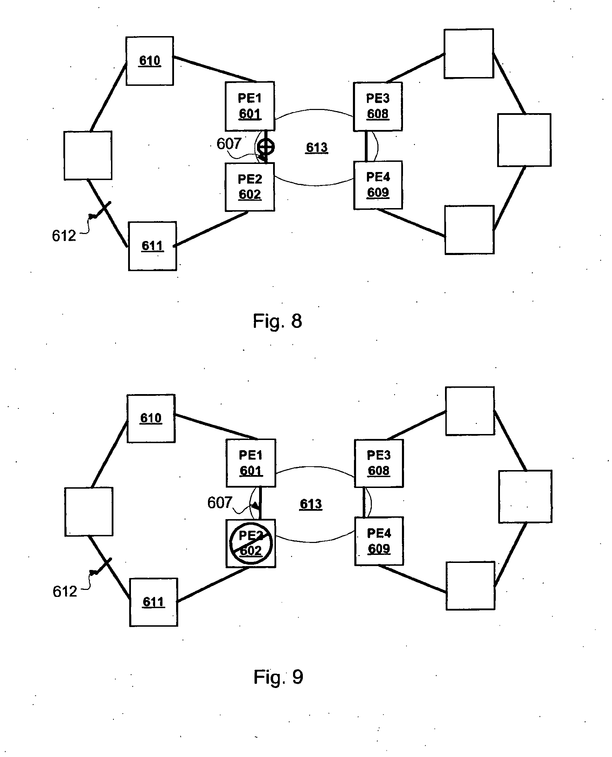

For example, a tunnel 607 between PE1 601 and PE2 602 fails as in figure 8. PE1 601 and PE2 602 know it is a tunnel failure when they do not receive IGP withdrawal of partner edge router PE1 601, PE 2 602 after certain amount of time. Any PE node 601, 602, 608, 609 will send a withdrawal message to other PE nodes 601, 602, 608, 609 if it finds out another PE node 601, 602, 608, 609 does not exist. After this period, PE1 601 and PE2 602 stop sending CCM from their ring interface towards ring bridges. The adjacent ring bridges 610, 611 detect there is a failure and initiate ring protection by unblocking RPL 612.

### 3. PE node failure

For example, the node of PE2 602 fails as in figure 9. The adjacent ring bridge 611 initiates ring protection after detecting the failure, e.g. no CCMs. PE1 601 know it is a node failure when it receives IGP withdrawal message of PE2 602 from PE4 609. PE1 601 then also sends out SF, signal failure, message to adjacent ring bridge 610 to inform of this failure. When ring bridges receive these messages, the RPL 612 will be unblocked to provide protection.

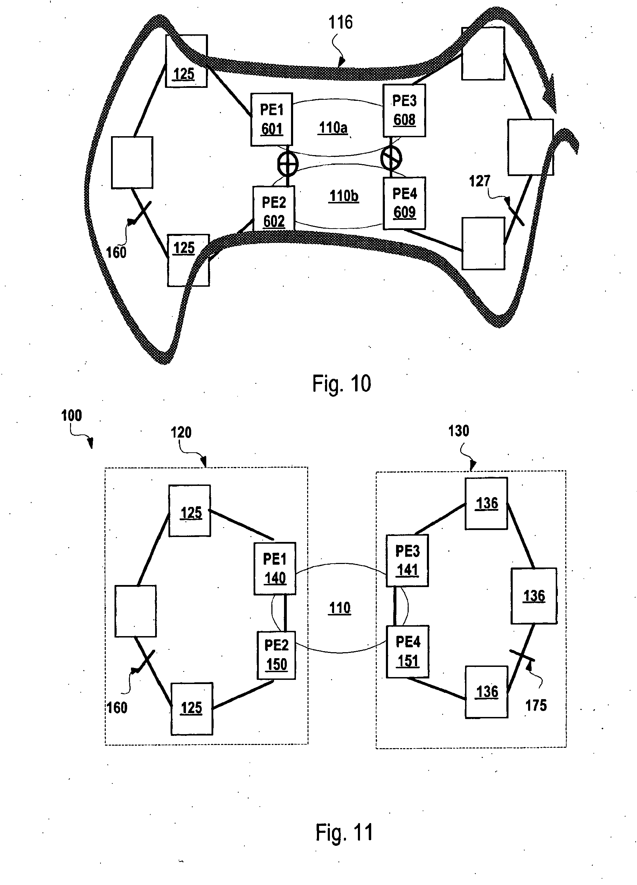

Figure 10 illustrates a case where the core network 110 is segmented. In figure 10 the core network 110 is segmented into two portions 110a and 110b. In a case where the core network 110 is segmented a superloop 116 can be created if the existing mechanisms for protection against loops are used. In figure 10 the core network 110 is segmented into two parts 110a, 110b and there is therefore no communication between PE 1 601, PE2 602 and PE3 608, PE4 609, respectively.

Since the core network is segmented into two parts 110a, 110b, PE1 601 is only connected to PE3 608 and PE2 602 is only connected to PE4 609. There is no communication between PE1 601, PE3 608 and PE2 602, PE4 609. PE1 601 will send out withdrawal messages about PE2 602 and PE4 609. PE2 602 will send out withdrawal messages about PE1 601 and PE3 608. PE3 608 will send out withdrawal messages about PE2 602 and PE4 609. PE4 609 will send out withdrawal messages about PE1 601 and PE3 608. After receiving those withdrawal messages, PE1 601 will assume PE2 602 has a node failure, at the same time, PE2 602 will assume PE1 601 has a node failure. Both PE1 601 and PE2 602 will send out SF message to adjacent ring bridges 125 to initiate the ring protection by unblocking RPL 160. PE3 608 and PE4 609 will behave the same way to unblock RPL 127 to provide protection. The result will be a superloop 116 as shown in Figure 10.

There is therefore a need for an improved solution for increasing the robustness of Ethernet rings by preventing that superloops can be created, which solution solves or at least mitigates at least one of the above mentioned problems.

### Summary

An object of the present invention is thus to provide a method and an arrangement for increasing the robustness of Ethernet rings by preventing a superloop from being created.

According to a first aspect, the present invention relates to a method in an interface node for protecting an Ethernet ring from a superloop going through the Ethernet ring. The Ethernet ring comprises a pair of interface nodes between the Ethernet ring and a VPLS-domain. The method comprising the steps of: receiving in the interface nodes a priority message indicating a priority level for each Ethernet ring connected to the VPLS-domain; receiving in the interface nodes a withdrawal message intended to indicate that the other interface node is malfunctioning; and transmitting from the interface node a signal failure message to the Ethernet ring in a case any of the other Ethernet rings has a lower priority level than the Ethernet ring.

Thus, the object is achieved according to the present invention by implementing a coordinating protocol among the Ethernet rings connected to the VPLS-domain. A priority message is received in the interface node indicating a priority level for each Ethernet ring connected to the VPLS-domain. When an interface node in an Ethernet ring receives a message indicating that the other interface node in the Ethernet ring is malfunctioning it only transmit a signal failure message in a case any other Ethernet ring has a lower priority than the Ethernet ring to which the interface node belongs.

According to a second aspect, the present invention relates to an interface node for protecting an Ethernet ring from a superloop going through the Ethernet ring, wherein the Ethernet ring comprises a pair of interface nodes between the Ethernet ring and a VPLS-domain, the interface node comprising: receiving means for receiving a priority message indicating a priority level for each Ethernet ring connected to the VPLS-domain. The receiving means being further configured for receiving a withdrawal message intended to indicate that the other interface node is malfunctioning; and transmitting means configured to transmitting a signal failure message to the Ethernet ring in a case any of the other Ethernet rings has a lower priority level than the Ethernet ring.

An advantage with embodiments of the present invention is that a superloop can not be created since at least one Ethernet ring will keep its ring protection link in response to a message indicating that its partner interface node is malfunctioning.

Yet another advantage with embodiments of the present invention is that less network resources are consumed since a superloop is prevented from being created. Yet another advantage of embodiments of the present invention is that a failure rate of the network also is reduced, since no superloop can be created.

### Brief description of the drawings

The invention is described in more detail with reference to enclosed drawings, wherein:
**Fig. 1** illustrates schematically an Ethernet ring.
**Fig. 2** illustrates schematically an Ethernet Ring Protection, ERP, state in an Ethernet ring.
**Fig. 3** illustrates schematically a multi-ring/ladder network comprising two Ethernet rings.
**Fig. 4** illustrates schematically a multi-ring/ladder network in which a superloop can be created.
**Fig. 5** illustrates schematically a Multi-ring/ladder network with protection against a superloop.
**Fig. 6** illustrates schematically interworking between Provider edge, PE, routers 601, 602 and an Ethernet ring.
**Fig. 7** illustrates schematically a link failure between a ring bridge and one PE node.
**Fig. 8** illustrates schematically a tunnel failure between the PE nodes in the Ethernet ring.
**Fig. 9** illustrates schematically a PE node failure in the Ethernet ring.
**Fig. 10** illustrates a case where a core network is segmented into two portions 110 a and 110 b.
**Fig. 11** shows a network in which a method according to the present invention can be implemented.
**Fig. 12** illustrates a certain situations where the core network is segmented into two parts 110 a and 110 b.
**Fig. 13** illustrates a block diagram of an interface node according to an exemplary embodiment of the present invention.
**Fig. 14** illustrates a method according to an exemplary embodiment of the present invention.

### Detailed description

In the following description, for purposes of explanation and not limitation, specific details are set forth, such as particular sequences of steps, signalling protocols and device configurations in order to provide a thorough understanding of the present invention. It will be apparent to one skilled in the art that the present invention may be carried out in other embodiments that depart from these specific details.

Moreover, those skilled in the art will appreciate that functions and means explained herein below may be implemented using software functioning in conjunction with a programmed microprocessor or general purpose computer, and/or using an application specific integrated circuit (ASIC). It will also be appreciated that while the current invention is primarily described in the form of methods and arrangements, the invention may also be embodied in a computer program product as well as a system comprising a computer processor and a memory coupled to the processor, wherein the memory is encoded with one or more programs that may perform the functions disclosed herein.

Turning now to figure 11, which shows a network 100 in which a method according to the present invention can be implemented. The network 100 comprises a core network 110 and at least one Ethernet ring 120, 130. The Ethernet ring 120 comprises at least one ring node 125 and two interface nodes PE1 140, PE2 150 between the Ethernet ring 120 and the core network 110. The Ethernet ring 130 also comprises at least one ring node 136 and two interface nodes PE 3 141, PE 4 151 between the Ethernet ring 130 and the core network 110. The core network 110 may be a VPLS-domain. The Ethernet ring 120 comprises a ring protection link 160 for protecting the Ethernet ring 120 from loops. The Ethernet ring 130 also comprises a ring protection link 175 for protecting the Ethernet ring 130 from loops. According to the present invention are priority messages (not shown) exchanged between the PE nodes 140, 150, 141 and 151. These priority messages indicate a priority level for each of the Ethernet rings 120, 130 connected to the VPLS-domain 110.

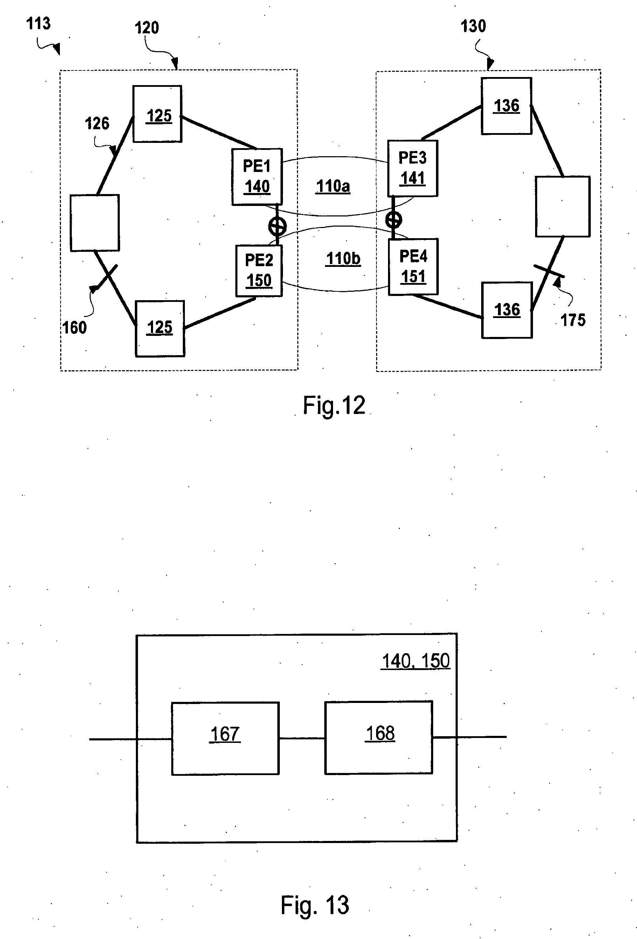

Now referring to figure 12 which illustrates a certain situations where the core network 110 is segmented. The core network 110 can for instance be segmented into two parts 110 a and 110 b as illustrated in figure 12. When the core network 110 is segmented into two parts 110 a and 110 b there are no communication between PE1 140, PE2 150 and PE3 141, PE4 151, respectively. Since the core network is segmented PE 4 151 does not have any communication path to PE1 140. PE 4 151 will therefore send out a withdrawal message (not shown) indicating that PE 4 151 can not reach PE 1 140. This withdrawal message will be received by PE2 150. PE2 150 will then assume that PE 1 140 has a node failure. The same will apply for PE2 150, PE3 141 and PE4 151, they will all assume their respective partner PE-node has a node failure. This since they will receive a withdrawal message concerning their respective partner PE node.

As mentioned above, each PE-node 140, 150, 141 and 151 have, respectively, received a priority message indicating a priority level for each Ethernet ring 120, 130 connected to the VPLS-domain 110. Consider a scenario where the priority level for the Ethernet ring 120 is higher than the priority level for the Ethernet ring 130. In this scenario the PE-nodes 140, 150 will, according to the present invention, transmit a signal failure message to the Ethernet ring 120 since there is another Ethernet ring 130 with a lower priority level, as indicated by the priority messages received by the PE-nodes 140, 150. This will result in that the ring protection link 160 will be unblocked.

PE3 141 and PE4 151 will, according to the present invention, on the other hand not transmit any signal failure messages to the Ethernet ring 130 since there is no other Ethernet ring with a lower priority level, as indicated by the priority messages received by the PE-nodes 141, 151. This will result in that the ring protection link 175 will stayed blocked. Since the ring protection link 175 will stayed blocked a superloop (not shown) can not be created in a network 113.

A signal failure message is according to exemplary embodiments of the present invention transmitted, from the PE-nodes 140, 150, 141, 151 to its respective Ethernet ring 120, 130 in a case the respective PE-node have information that there exists any other Ethernet ring 120, 130 with a lower priority level.

In another exemplary embodiment of the present invention is a signal failure message transmitted from the respective PE-node 140, 150, 141, 151 to its respective Ethernet ring 120, 130 in case the respective PE-node 140, 150, 141, 151 belongs to an Ethernet ring which is the only Ethernet ring connected to the VPLS-domain 110.

The priority messages may in an exemplary embodiment of the present invention be periodically transmitted in the VPLS-domain 110. In an exemplary embodiment of the present invention are the priority messages transmitted as individually packets. In yet another other exemplary embodiment of the present invention are the priority messages piggybacked as additional information on periodically sent packets.

The periodically sent messages may according to an exemplary embodiment of the present invention be BFD, Bidirectional Forwarding Detection, frames containing the priority levels.

In another embodiment of the method according to the present invention the method comprises the further step of unblocking the ring protection links 160, 175 when receiving the signal failure message in the ring nodes 125, 136 adjacent to the ring protection links 160, 175.

The ring nodes in the Ethernet rings 120, 130 may according to the present invention be connected to each other with duplex communication links. The duplex communication links may be standard 802.1 bridges.

The signal failure message in the present invention may be a signal failure message according to a G.8032 protocol standard.

Referring to figure 13, there is illustrated a block diagram of the interface node 140, 150, for protecting the Ethernet ring 120 from a superloop going through the Ethernet ring 120, in accordance with previously described exemplary embodiments of the present invention. The interface node 140, 150 comprise receiving means 167 for receiving a priority message indicating a priority level for each Ethernet ring 120, 130 connected to the VPLS-domain 110. The receiving means 167 are further configured for receiving a withdrawal message intended to indicate that the other interface node 140, 150 is malfunctioning. In the interface node 140, 150 there is also transmitting means 168 for transmitting a signal failure message to the Ethernet ring 120 in a case any of the other Ethernet rings 130 has a lower priority level than the Ethernet ring 120.

In another exemplary embodiment of the interface node 140, 150 according to the present invention is the transmitting means 168 further configured to transmit a signal failure message in a case the transmitting means 168 detects that the Ethernet ring 120 is the only Ethernet ring 120 connected to the VPLS-domain 110.

It should be noted that the interface node 140, 150 depicted in figure 13 may comprise other elements or means not illustrated. Furthermore, the different blocks in the interface node 140, 150 may not necessarily be separated but could be included in a single block.

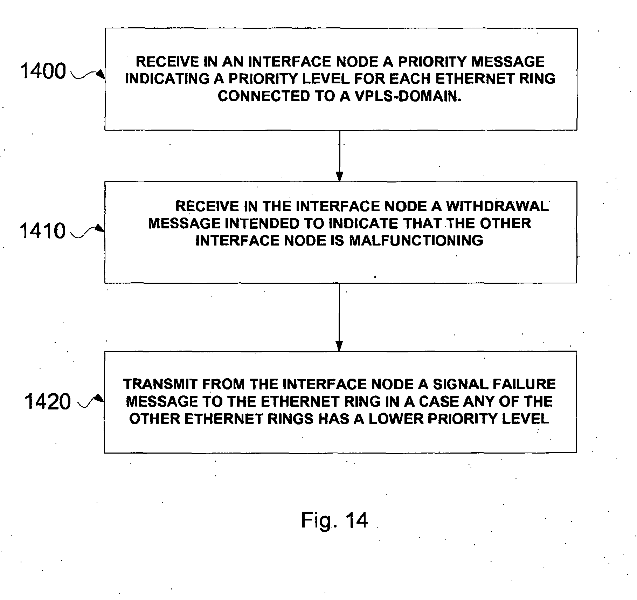

Referring to figure 14 there is illustrated a flowchart of a method describing the steps an interface node 140, 150 for protecting an Ethernet ring 120 from a superloop going through the Ethernet ring 120, in accordance with previously described embodiments of the present invention. As shown in figure 14, the method comprises:
1400 receiving in the interface nodes 140, 150 a priority message indicating a priority level for each Ethernet ring 120, 130 connected to the VPLS-domain 110;
1410 receiving in one of the interface nodes 140, 150 a withdrawal message intended to indicate that the other interface node 140, 150 is malfunctioning;
1420 transmitting from the interface node 140, 150 a signal failure message to the Ethernet ring 120 in a case any of the other Ethernet rings 130 has a lower priority level.

As previously described the method may also comprise the further step of unblocking (not shown) the ring protection link 160 when receiving a signal failure message in the ring node 125 adjacent to the ring protection link 160.

In the above described exemplary embodiments of the present invention the core network was segmented into two parts. Note that it is however possible that a superloop is created when the core network is segmented into more than two parts.

While the present invention has been described with respect to particular embodiments (including certain device arrangements and certain orders of steps within various methods), those skilled in the art will recognize that the present invention is not limited to the specific embodiments described and illustrated herein. Therefore, it is to be understood that this disclosure is only illustrative. Accordingly, it is intended that the invention be limited only by the scope of the claims appended hereto.

## Claims

1. A method in an interface node (140, 150) for protecting an Ethernet ring (120) from a superloop going through the Ethernet ring (120), wherein the Ethernet ring (120) comprises a pair of interface nodes (140, 150) between the Ethernet ring (120) and a Virtual Private Local area network Service, VPLS,-domain (110), the method comprising the steps of:
- receiving (1400) in the interface node (140, 150) a priority message indicating a priority level for each Ethernet ring (120, 130) connected to the VPLS-domain (110), wherein the priority messages are periodically transmitted in the VPLS-domain (110);
- receiving (1410) in the interface node (140, 150) a withdrawal message intended to indicate that the other interface node (140, 150) is malfunctioning; and
- transmitting (1420) from the interface node (140, 150) a signal failure message to the Ethernet ring (120) in a case any other Ethernet rings (130) has a lower priority level than said Ethernet ring (120).

2. A method according to claim 1, wherein the step of transmitting (1420) further comprising transmitting a signal failure message in a case said Ethernet ring (120) is the only Ethernet ring (120) connected to the VPLS-domain (110).

3. A method according to any of claims 1 to 2, wherein the priority messages are transmitted as individually packets.

4. A method according to any of claims 1 to 3, wherein the priority messages are BFD, Bidirectional Forwarding Detection, frames containing the priority level.

5. A method according to any of claims 1 to 4, wherein the method comprises the further step of unblocking a ring protection link (160) in the Ethernet ring (120) when receiving a signal failure message in a ring node (125) adjacent to the ring protection link (160).

6. A method according to any of claims 1 to 5, wherein said signal failure message is a signal failure message according to a G.8032 protocol standard.

7. An interface node (140, 150) for protecting an Ethernet ring (120) from a superloop going through the Ethernet ring (120), wherein the Ethernet ring (120) comprises a pair of interface nodes (140, 150) between the Ethernet ring (120) and a Virtual Private Local area network Service, VPLS, -domain (110), the interface node (140, 150) comprising:
- receiving means (167) for receiving a priority message indicating a priority level for each Ethernet ring (120, 130) connected to the VPLS-domain (110); wherein the priority messages are periodically transmitted in the VPLS-domain (60);
- the receiving means (167) being further configured for receiving a withdrawal message intended to indicate that the other interface node (140, 150) is malfunctioning; and
- transmitting means (168) configured to transmitting a signal failure message to the Ethernet ring (120) in a case any of the other Ethernet rings (130) has a lower priority level than said Ethernet ring (120).

8. An interface node (140, 150) according to claim 7,
wherein the transmitting means (168) is further configured to transmit a signal failure message in a case the transmitting means (168) detects that the Ethernet ring (120) is the only Ethernet ring (120) connected to the VPLS-domain (110).

9. An interface node (40, 50) according to any of claims 7 to 8, wherein the priority messages are piggybacked as additional on periodically sent packets.

10. An interface node (40, 50) according to any of claims 7 to 9, wherein the priority messages are transmitted as individually packets.

11. An interface node (40, 50) according to any of claims 7 to 10, wherein said signal failure message is a signal failure message according to a G.8032 protocol standard.

12. An interface node (40, 50) according to any of claims 7 to 11, wherein a duplex communication link connects the interface node (40, 50) to an adjacent ring node in the Ethernet ring (10).

13. An interface node (40, 50) according to claim 12,
wherein the duplex communication links is a standard 802.1 bridge.

## Patentansprüche

1. Verfahren in einem Schnittstellenknoten (140, 150) für den Schutz eines Ethernet-Rings (120) vor einem durch den Ethernet-Ring (120) hindurchgehenden Superloop, wobei der Ethernet-Ring (120) ein Paar von Schnittstellenknoten (140, 150) zwischen dem Ethernet-Ring (120) und einer Virtual Private Local area network Service, VPLS,-Domäne (110) umfasst, welches Verfahren die Schritte umfasst:
- Empfangen (1400) im Schnittstellenknoten (140, 150) einer Prioritätsmeldung, welche eine Prioritätsstufe für jeden mit der VPLS-Domäne (110) verbundenen Ethernet-Ring (120, 130) anzeigt, wobei die Prioritätsmeldungen in der VPLS-Domäne (110) periodisch übertragen werden;
- Empfangen (1410) im Schnittstellenknoten (140, 150) einer Rücknahme-Meldung, die dazu dient, das Nichtfunktionieren des anderen Schnittstellenknotens (140, 150) anzuzeigen; und
- Übertragen (1420) einer Signalfehlermeldung vom Schnittstellenknoten (140, 150) an den Ethernet-Ring (120) in dem Fall, in dem andere Ethernet-Ringe (130) eine niedrigere Prioritätsstufe aufweisen als der Ethernet-Ring (120).

2. Verfahren nach Anspruch 1, wobei der Schritt des Übertragens (1420) ferner das Übertragen einer Signalfehlermeldung in dem Fall, in dem der Ethernet-Ring (120) der einzige Ethernet-Ring (120) ist, der mit der VPLS-Domäne (110) verbunden ist, umfasst.

3. Verfahren nach einem der Ansprüche 1 bis 2, wobei die Prioritätsmeldungen als Einzelpakete übertragen werden.

4. Verfahren nach einem der Ansprüche 1 bis 3, wobei die Prioritätsmeldungen BFD, Bidirectional Forwarding Detection,-Rahmen sind, welche die Prioritätsstufe enthalten.

5. Verfahren nach einem der Ansprüche 1 bis 4, wobei das Verfahren den zusätzlichen Schritt des Entsperrens einer Ringschutzverbindung (160) im Ethernet-Ring (120) beim Empfangen einer Signalfehlermeldung in einem an die Ringschutzverbindung (160) angrenzenden Ringknoten (125) umfasst.

6. Verfahren nach einem der Ansprüche 1 bis 5, wobei die Signalfehlermeldung eine Signalfehlermeldung gemäß einem G.8032-Protokollstandard ist.

7. Schnittstellenknoten (140, 150) für den Schutz eines Ethernet-Rings (120) vor einem durch den Ethernet-Ring (120) hindurchgehenden Superloop, wobei der Ethernet-Ring (120) ein Paar von Schnittstellenknoten (140, 150) zwischen dem Ethernet-Ring (120) und einer Virtual Private Local area network Service, VPLS, -Domäne (110) umfasst, welcher Schnittstellenknoten (140, 150) umfasst:
- Empfangsmittel (167) zum Empfangen einer Prioritätsmeldung, welche eine Prioritätsstufe für jeden mit der VPLS-Domäne (110) verbundenen Ethernet-Ring (120, 130) anzeigt; wobei die Prioritätsmeldungen in der VPLS-Domäne (60) periodisch übertragen werden;
- wobei das Empfangsmittel (167) ferner zum Empfangen einer Rücknahme-Meldung ausgebildet ist, die dazu dient, das Nichtfunktionieren des anderen Schnittstellenknotens (140, 150) anzuzeigen; und
- Übertragungsmittel (168), das zum Übertragen einer Signalfehlermeldung an den Ethernet-Ring (120) in dem Fall, in dem andere Ethernet-Ringe (130) eine niedrigere Prioritätsstufe aufweisen als der Ethernet-Ring (120), ausgebildet ist.

8. Schnittstellenknoten (140, 150) nach Anspruch 7, wobei das Übertragungsmittel (168) ferner zum Übertragen einer Signalfehlermeldung in dem Fall, in dem das Übertragungsmittel (168) detektiert, dass der Ethernet-Ring (120) der einzige Ethernet-Ring (120) ist, der mit der VPLS-Domäne (110) verbunden ist, ausgebildet ist.

9. Schnittstellenknoten (40, 50) nach einem der Ansprüche 7 bis 8, wobei die Prioritätsmeldungen in Form von Huckepack als zusätzliche periodisch gesendete Pakete auftreten.

10. Schnittstellenknoten (40, 50) nach einem der Ansprüche 7 bis 9, wobei die Prioritätsmeldungen als Einzelpakete übertragen werden.

11. Schnittstellenknoten (40, 50) nach einem der Ansprüche 7 bis 10, wobei die Signalfehlermeldung eine Signalfehlermeldung gemäß einem G.8032-Protokollstandard ist.

12. Schnittstellenknoten (40, 50) nach einem der Ansprüche 7 bis 11, wobei eine Duplexkommunikationsverbindung den Schnittstellenknoten (40, 50) mit einem angrenzenden Ringknoten im Ethernet-Ring (10) verbindet.

13. Schnittstellenknoten (40, 50) nach Anspruch 12, wobei die Duplexkommunikationsverbindung eine Standard-802.1-Brücke ist.

## Revendications

1. Procédé dans un noeud d'interface (140, 150) de protection d'un anneau Ethernet (120) à partir d'une superboucle passant par l'anneau Ethernet (120), ledit anneau Ethernet (120) comprenant une paire de noeuds d'interface (140, 150) entre l'anneau Ethernet (120) et un domaine VPLS (Virtual Private Local area network Service) (110), le procédé comprenant les étapes consistant à:
- recevoir (1400) dans le noeud d'interface (140, 150) un message de priorité indiquant un niveau de priorité pour chaque anneau Ethernet (120, 130) connecté au domaine VPLS (110), les messages de priorité étant transmis périodiquement dans le domaine VPLS (110);
- recevoir (1410) dans le noeud d'interface (140, 150) un message de retrait destiné à indiquer que l'autre noeud d'interface (140, 150) ne fonctionne pas correctement; et
- transmettre (1420) à partir du noeud d'interface (140, 150) un message d'échec de signal à l'anneau Ethernet (120) dans le cas où tout autre anneau Ethernet (130) présente un niveau de priorité inférieur à celui dudit anneau Ethernet (120).

2. Procédé selon la revendication 1, dans lequel l'étape de transmission (1420) comprend en outre la transmission d'un message d'échec de signal dans le cas où ledit anneau Ethernet (120) est le seul anneau Ethernet (120) connecté au domaine VPLS (110).

3. Procédé selon l'une quelconque des revendications 1 à 2, dans lequel les messages de priorité sont transmis en tant que paquets individuels.

4. Procédé selon l'une quelconque des revendications 1 à 3, dans lequel les messages de priorité sont des trames BFD, Détection de Transfert Bidirectionnel, contenant le niveau de priorité.

5. Procédé selon l'une quelconque des revendications 1 à 4, dans lequel le procédé comprend l'étape supplémentaire consistant à débloquer un lien de protection annulaire (160) dans l'anneau Ethernet (120) lors de la réception d'un message d'échec de signal dans un noeud d'anneau (125) adjacent à la liaison de protection annulaire (160).

6. Procédé selon l'une quelconque des revendications 1 à 5, dans lequel ledit message d'échec de signal est un message d'échec de signal selon une norme de protocole de G.8032

7. Noeud d'interface (140, 150) de protection d'un anneau Ethernet (120) à partir d'une superboucle passant par l'anneau Ethernet (120), ledit anneau Ethernet (120) comprenant une paire de noeuds d'interface (140, 150) entre l'anneau Ethernet (120) et un domaine VPLS (Virtual Private Local area network Service) (110), le noeud d'interface (140, 150) comprenant:
- un moyen de réception (167) pour recevoir un message de priorité indiquant un niveau de priorité pour chaque anneau Ethernet (120, 130) connecté au domaine VPLS (110); les messages de priorité étant transmis périodiquement dans le domaine VPLS (60);
- le moyen de réception (167) étant en outre configuré pour recevoir un message de retrait destiné à indiquer que l'autre noeud d'interface (140, 150) ne fonctionne pas correctement; et
- un moyen de transmission (168) configuré pour transmettre un message d'échec de signal à l'anneau Ethernet (120) dans le cas où tout autre anneau Ethernet (130) présente un niveau de priorité inférieur à celui dudit anneau Ethernet (120).

8. Noeud d'interface (140, 150) selon la revendication 7, dans lequel le moyen de transmission (168) est en outre configuré pour transmettre un message d'échec de signal dans le cas où le moyen de transmission (168) détecte que l'anneau Ethernet (120) est le seul anneau Ethernet (120) connecté au domaine VPLS (110).

9. Noeud d'interface (40, 50) selon l'une quelconque des revendications 7 à 8, dans lequel les messages de priorité sont superposés en tant que suppléments à des paquets envoyés périodiquement.

10. Noeud d'interface (40, 50) selon l'une quelconque des revendications 7 à 9, dans lequel les messages de priorité sont transmis en tant que paquets individuels.

11. Noeud d'interface (40, 50) selon l'une quelconque des revendications 7 à 10, dans lequel ledit message d'échec de signal est un message d'échec de signal selon une norme de protocole de G.8032.

12. Noeud d'interface (40, 50) selon l'une quelconque des revendications 7 à 11, dans lequel une liaison de communication en duplex relie le noeud d'interface (40, 50) à un noeud d'anneau adjacent à l'anneau Ethernet (10).

13. Noeud d'interface (40, 50) selon la revendication 12, dans lequel la liaison de communication en duplex est un pont standard 802.1.
